Europäisches Patentamt

European Patent Office

Office européen des brevets

(11) Publication number: **0 336 091**

**A2**

## EUROPEAN PATENT APPLICATION

(21) Application number: **89102960.5**

(22) Date of filing: **21.02.89**

(51) Int. Cl.4: **G06F 9/38**

(30) Priority: **04.04.88 JP 81191/88**

(43) Date of publication of application:
**11.10.89 Bulletin 89/41**

(84) Designated Contracting States:
**DE FR GB**

(71) Applicant: **KABUSHIKI KAISHA TOSHIBA**
**72, Horikawa-Cho Saiwai-ku**
**Kawasaki-shi Kanagawa-ken(JP)**

(72) Inventor: **Miyamori, Takashi**
**4-21-6, Honkomagome Bunkyo-ku**
**Tokyo(JP)**
Inventor: **Miyata, Misao**
**5-2-904, Honmokuhara Naka-ku**
**Yokohama-shi Kanagawa-ken(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **Pipeline type microprocessor.**

(57) A pipeline type microprocessor having an in-
struction fetch unit (3), an address generation unit
(9), an address translation unit, and an instruction
execution unit (15), which further comprises a pre-
decoding unit (23) for converting each instruction
fetched into an intermediate instruction, the decod-
ing operation of which is completed within a pre-
determined time, and a decoded instruction buffer
unit (25) for temporarily storing and holding each
intermediate instruction generated from the pre-de-
coding unit (23) wherein the instruction decoding
process is divided into two stage groups by the
decoded instruction buffer unit (25). With this con-
struction, the disturbance in the pipeline due to the
dispersion in each decoding time in the pipeline can
be prevented.

F I G. 4

# PIPELINE TYPE MICROPROCESSOR

BACKGROUND OF THE INVENTION


Field of the Invention

The present invention relates to a pipeline type microprocessor, and more particularly to a pipeline type microprocessor for preventing any disturbances in the pipeline process to achieve high performance.


Description of the Piror Art

In conventional microprocessors for executing instructions according to a microprogram control type, performances have been increasingly improved by execution of instructions through a pipeline processing system. For instance, one of the pipeline systems comprises an instruction fetch stage, an instruction decode stage, an effective address calculation stage, an address translation stage, an operand read stage, an instruction execution stage and an operand write stage, and each instruction is processed from right to left.

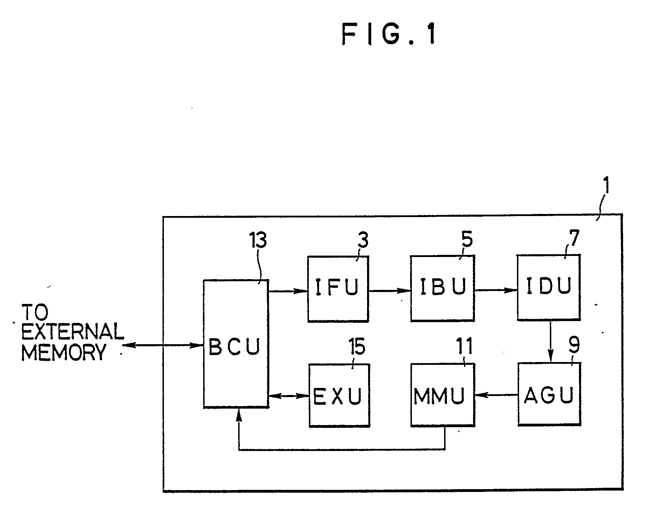

Fig. 1 indicates the construction of a prior art pipeline type microprocessor. In the pipeline type microprocessor 1, each instruction is fetched by an instruction fetch unit (IEU) 3. The instruction thus fetched is applied to an instruction buffer unit (IBU) 5 where it is held therein temporarily, and then it is decoded in an instruction decode unit (IDU) 7. After the instruction is decoded, an effective address of the instruction is calculated in an address generation unit (AGU) 9 in accordance with the decoded result so as to access an operand data.

The effective address thus calculated is applied to a memory management unit (MMU) 11, which is an addresses translation unit for translating an effective address into a physical address when actually reading the operand data. The physical address, i.e., the actual address thus sought, is sent to an external memory not shown through a bus control unit (BCU) 13, which controls the fetch of instructions, the reading out of the operand data and the transfer of data to such places as the external memory and peripheral units not shown. The operand data is then read out and applied to an execution unit (EXU) 15 through the bus control unit 13, where it is executed in accordance with the result of decoding. The operand data is then read out and applied to an execution unit (EXU) 15 through the bus control unit 13, where it is executed in accordance with the result of decoding. The operand data thus executed is read, for instance, in the external memory through the bus control unit 13, and the execution of the instruction in question is then terminated.

The decoding time for a pipeline type microprocessor that processes a complex instruction set (CISC) differs from type to type and also depends on the instruction set processed.

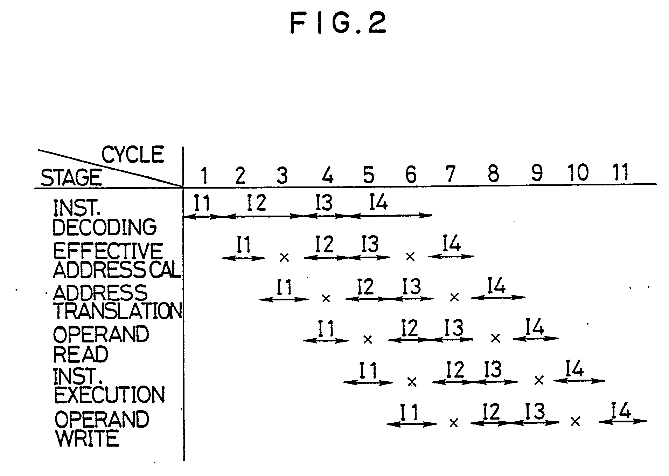

Fig. 2 shows a flow of instructions having different decoding times. In this figure, instructions I1 and I3 require one decoding cycle while instructions I2 and I4 require two decoding cycles. For such a case, a quiescent state occurs as indicated by the mark "X" between the instructions I1 and I2 and between the instructions I33 and I4 in the effective address calculation stage, the address conversion stage, the operand read stage, the execution stage and the operand write stage in the pipeline system. As a result, the availability of each stage and the throughput of the pipeline system is decreased, which thus disturbs the pipeline processing flow and lowers the performance of the pipeline type microprocessor.

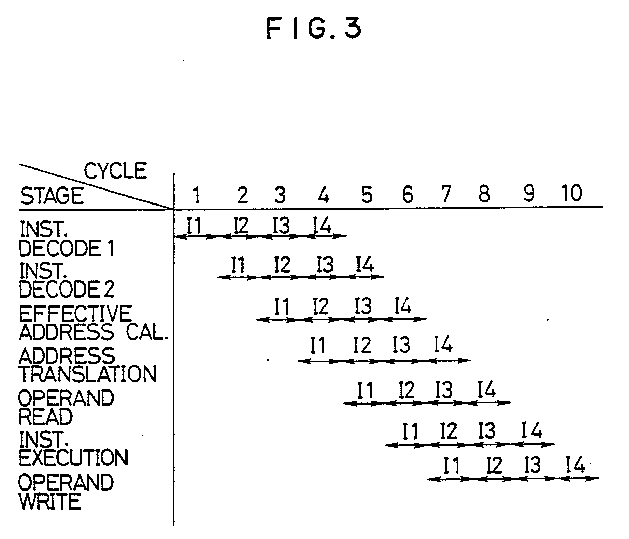

One proposed solution to the problem described above is to pipeline the decoding process. For instance, the decoding process for instructions could be performed in two stages by dividing the decoding process into two large stage groups. Fig. 3 shows a flow of such a pipeline process for instructions, wherein the decoding process for instructions has been divided into two stages. In the figure, the instructions I2 and I4 which require two cycles for decoding instructions are processed in instruction decoding stages 1 and 2 in a single cycle, thereby preventing any disturbance in the pipeline shown in Fig. 2.

However, when instructions that require more than three cycles are to be decoded of the dispersion of the decoding time can not be absorbed in the decoding operation in the two-stage type pipeline microprocessor. As a result, dispersion in the pipeline similar to the prior art in Fig. 2 occurs.

One solution to the problem described above is to increase the number of pipeline stages for the decoding operation. However, it is of no use to memory to increase the number of the stages that complete the decoding operation in one cycle or two cycles, and only leads to an increase in its structural size. Furthermore, the effective efficiency of the microprocessor deteriorates when a branch condition occurs due to the increase in the number of pipeline stages.


SUMMARY OF THE INVENTION

It is therefore an object of the present invention to overcome the above drawbacks and to provide a pipeline type microprocessor in which any disturbances in the pipeline process are prevented from occurring, thereby increasing the availability in each stage and the throughput of the microprocessor, as well as improving its performance.

In order to achieve the above objects, the pipeline type microprocessor in accordance with the present invention comprises pre-decoding means for converting each fetched instruction into an intermediate instruction, in which decoding is completed within a predetermined time, intermediate instruction buffer means for temporarily storing and holding each intermediate instruction generated from the pre-decoding means, and decoding means for receiving each of the intermediate instructions held in the intermediate instruction buffer means to decode within the predetermined time the intermediate instruction into a form capable of being executed.

According to one feature of the present invention, a pipeline type microprocessor comprises an instruction fetch unit for fetching each instruction, an instruction buffer unit for temporarily holding the instruction fetched by the instruction fetch unit, a pre-decoding unit for converting each fetched instruction from the instruction buffer section into an intermediate instruction to be decoded within a predetermined time, a decoded instruction buffer unit for temporarily storing and holding each intermediate instruction from the pre-decoding unit, a decoding unit for receiving each of the intermediate instructions from the decoded instruction buffer unit to decode within the predetermined time the intermediate instruction into a form capable of being executed, an address generation unit for calculating an effective address of the instruction in accordance with the decoded instruction from the decoding unit, a memory management unit for converting the effective address into a physical address to read an operand data, and an instruction execution unit for processing the operand data in accordance with the decoded instruction from the decoding unit.

These and other objects, features and advantages of the invention will become more apparent from the following description of the invention with reference to the accompanying drawings.

## BRIEF DESCRIPTION OF THE DRAWINGS

Fig. 1 illustrates a construction of a pipeline type microprocessor according to the prior art;

Fig. 2 is a pipeline process flow for instructions which require different decoding cycles wherein quiescent states exist between the instructions I1 and I2 and between the instructions I3 and I4, according to the prior art;

Fig. 3 is a pipeline process flow according to the prior art in which the decoding operation is carried out in one cycle by the provision of two instruction decoding stages;

Fig. 4 is a construction of the pipeline type microprocessor according to the present invention;

Fig. 5 is an intermediate instruction format according to the present invention, to be used in the microprocessor shown in fig. 4; and

Fig. 6 is a pipeline propcess flow according to the present invention.

## DESCRIPTION OF THE PREFERRED EMBODIMENT

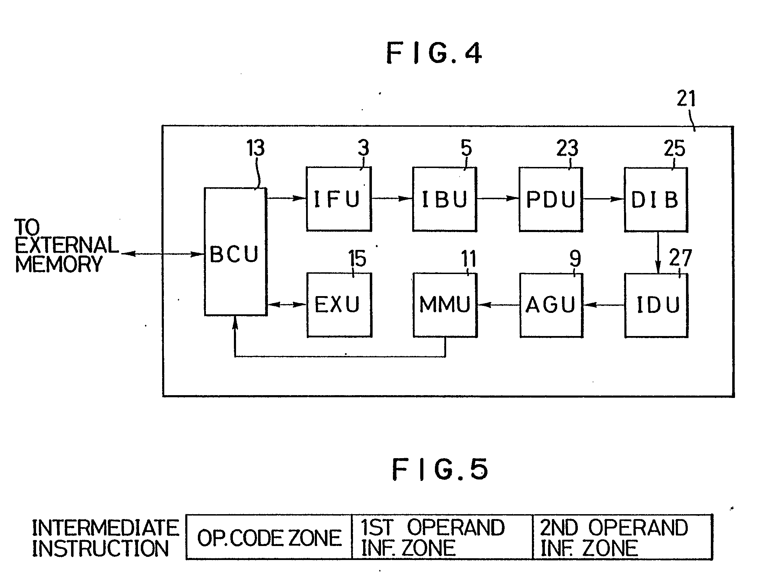

In the pipeline type microprocessor according to the present invention, as shown in Fig. 4, the decoding process of instructions is divided into two stages: a first decoding stage that deals with each of the instructions fetched and a second decoding stage that terminates the decoding operation of all the instructions within a predetermined decoding time. In Fig. 4, the same reference numerals are used for the same constructing elements having the same functions as those shown in Fig. 1. Accordingly, any detailed explanation for these elements will not be necessary here.

The pipeline type microprocessor shown in Fig. 4 comprises a pre-decoding unit (PDU) 23, a decoded instruction buffer unit (DIB) 25, and a decoding unit (IDU) 27 ion addition to the common elements described above.

The pre-decoding unit 23 performs a pre-decoding operation for each instruction held in the instruction buffer unit 5 after having been fetched by the instruction fetch unit 3. More particularly, the pre-decoding unit 23 converts an instruction thus fetched into an intermediate instruction in an intermediate form so that the decoding unit 27 can decode all of the instructions to be executed in the microprocessor 21 within a predetermined time.

Fig. 5 shows one example of the format of an intermediate instruction in intermediate form. The intermediate instruction format consists of an operation code zone for designating the content of the process or function of an instruction to be performed, first and second operand information zones being indicative of each operand data, respectively. The intermediate instruction format is constructed relatively simple and is formed in an instruction format which enables the decoding operation to be carried out in a short time, for instance, in one cycle. Each of the intermediate instructions thus converted into the intermediate instruction format is applied to the decode instruction buffer unit 25.

The buffer unit 25 is a buffer for storing and holding the intermediate instructions applied from the pre-decoding unit 23. Each instruction held in the buffer unit 25 is then applied to the decoding unit 27.

The decoding unit 27 decodes the intermediate instruction held in the decoded instruction buffer unit 25 into a form that is capable of being executed within a predetermined length of time. The instruction thus decoded in the decoding unit 27 is issued therefrom when the execution unit 15 is ready for executing the instruction. After the decoding operation has been completed in the decoding unit 27, the similar pipeline process to that according to the prior art shown in Fig. 1 is carried out through each of the stages.

In this case, it is necessary for the intermediate instructions to have been stored in the decoded instruction buffer 25 so that the intermediate instructions can always be supplied to the decoding unit 27. For this reason, the instruction converted into the intermediate instruction through the pre-decoding unit 23 is stored in the decoded instructions buffer 25, while waiting for issuance of each of the instructions from the decoding unit 27 due to an execution delay which is often brought about by hazard after the address conversion or due to the execution delay of instructions which require a long execution time.

According to the pipeline type microprocessor having the construction described above, the pipeline process is largely divided into two flows of sequence; one is a flow from "instruction fetch → pre-decoding" sequence, and the other is a flow from "instruction decode → effective address calculation → address translation → operand read → instruction execution → operand write" sequence.

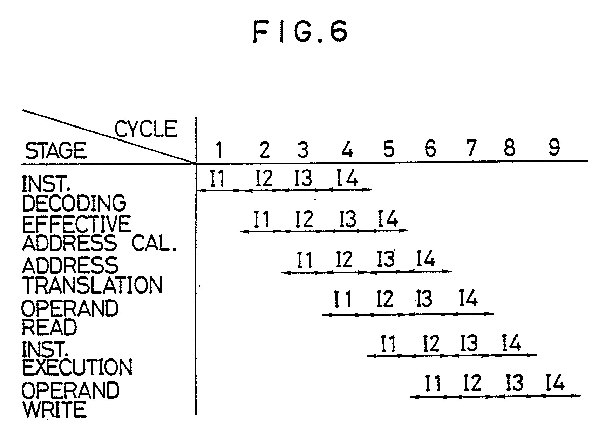

Fig. 6 shows a flow of the latter half process after instruction decoding in the pipeline type microprocessor according to the present invention. In the figure, each of the intermediate instructions is to be decoded by the decoding section 27 in one cycle. As a result, each of the instructions I1 through I4 is processed within one cycle in each stage of the pipeline after the decoding operation as shown in Fig. 6 in the present invention, unlike the one shown in Fig. 1 according to the prior art.

With the construction described above, unless any hazard occurs after an address is converted, the quiescent state in each stage is eliminated and any disturbance in the pipeline due to the dispersion in the decoding time can be prevented after the instruction decoding operation. As a result, the availability in each stage in the pipeline system and the throughput of the microprocessor can be improved.

Since the instruction decoding process is divided into two stages in the pipeline type microprocessor according to the present invention, the decoding operation in each stage becomes relatively simple and the design of the pre-decoding unit 23 and the decoding unit 27 can be facilitated.

Moreover, the decoding unit 27 may be omitted only when the instruction decoding is completely carried out in the pre-decoding unit 23, and each instruction is stored in the decoded instruction buffer unit 25 in a completely decoded form. In this case, the pipeline process is divided into two flows by the decoded form. In this case, the pipeline process is divided into two flows by the decoded instruction buffer unit 25; one is "instruction fetch → instruction decode " flow, and the other is " effective address calculation address translation → operand read → instruction execution → operand write " flow.

Consequently, the disturbance in the latter half pipeline process can be prevented. And the number of stages in the latter half pipeline process can be reduced, because the instruction decoding section is not necessary in the latter half pipeline process. Furthermore, it may also be possible to construct the decoded instruction buffer unit 25 as a loop buffer so that any instruction within the loop would be held in the decoded instruction buffer unit 25.

As has been described in the foregoing embodiment according to the present invention, since the decoding process is divided into two large stage groups in the pipeline process, in which a buffer is provided between the two stage groups, any disturbance in the pipeline due to the dispersion in the instruction decoding time can be prevented. Thus, the availability in each pipeline processing stage and the throughput of the microprocessor according to the present invention can be increased, while realizing a high performance for the microprocessor.

According to the present invention, the construction for performing the decoding operations can be easily designed.

While the invention has been described in its preferred embodiment, it is to be understood that the words which have been used are words of description rather than limitation and that various changes and modifications may be made within the purview of the appended claims without departing from the true scope and spirit of the invention in its broader aspects.

## Claims

1. A pipeline type microprocessor for executing instructions through a pipeline processing, comprising:
pre-decoding means (23) for converting each fetched instruction into an intermediate instruction, in which decoding is completed within a predetermined time;
intermediate instruction buffer means (25) for temporarily storing and holding each intermediate instruction generated from the pre-decoding means (23); and
decoding means (27) for receiving each of the intermediate instructions held in the intermediate instruction buffer means to decode within the predetermined time the intermediate instruction into a form capable of being executed.

2. The pipeline type microprocessor as claimed in claim 1, wherein the instruction decoding process is divided into two stage groups by said intermediate instruction buffer means (25) so as to prevent disturbance in the pipeline processing due to a dispersion in each decoding time in each stage in the pipeline processing.

3. The pipeline type microprocessor as claimed in claim 2, wherein one of the two stage groups is a pipeline process flow such that "instruction fetch → the pre-decoding" and the other is a pipeline process flow such that "intermediate instruction decoding → effective address calculation → address translation → the operand read → instruction execution → operand write".

4. The pipeline type microprocessor as claimed in claim 1, further comprising:
an instruction fetch unit (3) for fetching each instruction;
an instruction buffer unit (5) for temporarily holding the instruction fetched by the instruction fetch unit (3);
an address generation section (9) for calculating an effective address of the instruction in accordance with the decoded instruction from said decoding means (27);
a memory management section (11) for converting the effective address into a physical address to read an operand data; and
an instruction execution section (15) for processing the operand data in accordance with the decoded instruction from said decoding means (27).

5. The pipeline type microprocessor as claimed in claim 1, wherein the intermediate instruction consists of an operation code zone for designating the content of the process or function of an instruction to be performed, first and second operand information zones being indicative of each operand data, respectively.

6. A pipeline type microprocessor comprising:
an instruction fetch unit (3) for fetching each instruction;
an instruction buffer unit (5) for temporarily holding the instruction fetched by the instruction fetch unit (3);
a pre-decoding section (23) for converting each fetched instruction from the instruction buffer unit (5) into an intermediate instruction to be decoded within a predetermined time;
a decoded instruction buffer unit (25) for temporarily storing and holding each intermediate instruction from the pre-decoding unit (23);
a decoding unit (27) for receiving each of the intermediate instructions from the decoded instruction buffer section (25) to decode within the predetermined time the intermediate instruction into a form capable of being executed;
an address generation unit (9) for calculating an effective address of the instruction in accordance with the decoded instruction from the decoding section (27);
a memory management unit (11) for converting the effective address into a physical address to read an operand data; and
an instruction execution unit (15) for processing the operand data in accordance with the decoded instruction from the decoding unit.

7. The pipeline type microprocessor as claimed in claim 6, wherein the instruction decoding process is divided into two stage groups by said decoded instruction buffer section so as to prevent disturbance in the pipeline processing due to a dispersion in each decoding time in each stage in the pipeline processing.

8. The pipeline type microprocessor as claimed in claim 7, wherein one of the two stage groups is a pipeline process flow such that "instruction fetch → the pre-decoding" and the other is a pipeline process flow such that "instruction decoding → effective address calculation → address conversion → the operand read → instruction execution → operand write".

9. The pipeline type microprocessor as claimed in claim 6, wherein the intermediate instruction consists of an operation code zone for designating the content of the process or function of an instruction to be performed, first and second operand information zones being indicative of each operand data, respectively.

# F I G . 1

# FIG.2

# F I G. 3

F I G. 4

21

13 BCU
3 IFU
5 IBU
23 PDU
25 DIB
15 EXU
11 MMU
9 AGU
27 IDU

TO EXTERNAL MEMORY

F I G. 5

| INTERMEDIATE INSTRUCTION | OP.CODE ZONE | 1ST OPERAND INF. ZONE | 2ND OPERAND INF. ZONE |
|---|---|---|---|

# FIG.6

| STAGE \ CYCLE | 1 | 2 | 3 | 4 | 5 | 6 | 7 | 8 | 9 |
|---|---|---|---|---|---|---|---|---|---|
| INST. DECODING | I1 | I2 | I3 | I4 | | | | | |
| EFFECTIVE ADDRESS CAL. | | I1 | I2 | I3 | I4 | | | | |
| ADDRESS TRANSLATION | | | I1 | I2 | I3 | I4 | | | |
| OPERAND READ | | | | I1 | I2 | I3 | I4 | | |
| INST. EXECUTION | | | | | I1 | I2 | I3 | I4 | |
| OPERAND WRITE | | | | | | I1 | I2 | I3 | I4 |